# FASCICULE DE BREVET EUROPEEN

(11) **EP 1 126 568 B1**
(45) Date de publication et mention de la délivrance du brevet: **06.02.2008**
(21) Numéro de dépôt: 01400222.4
(22) Date de dépôt: 29.01.2001
(51) Int. Cl.: H02B 1/06, H02B 1/056

(54) **Ensemble de départ-moteur**
Motorstarteranordnung
Motor starter assembly

(30) Priorité: 14.02.2000 FR 0002139
(43) Date de publication de la demande: 22.08.2001
(73) Titulaire: SCHNEIDER ELECTRIC INDUSTRIES SAS, 92500 Rueil-Malmaison (FR)
(72) Inventeur: Deschamps, Jean-Christophe, 21700 Nuits Saint-Georges (FR); Morinaud,Patrick, 92000 Nanterre (FR)

(56) Documents cités:
- FR-A- 2 662 865
- US-A- 5 493 194

## Description

La présente invention concerne un ensemble de départ-moteur comprenant un disjoncteur, un contacteur disposé sous le disjoncteur, le disjoncteur et le contacteur étant munis de bornes de puissance de manière à pouvoir être connectés à une alimentation de puissance et à une charge et à pouvoir être interconnectés entre eux.

Dans le document EP - 869 594 est décrit un ensemble de départ-moteur du type indiqué ci-dessus. Cet ensemble de départ-moteur est doté d'un socle qui assure l'alimentation de puissance de l'ensemble, qui forme un support pour l'ensemble et qui est muni d'un circuit imprimé routant les conducteurs qui relient le contacteur et le disjoncteur à un bus de terrain. Ce dispositif ménage des connexions fiables, mais a pour inconvénient de nécessiter un socle spécifique complexe.

On connaît d'après le document DE- 295 07 456 un ensemble de départ-moteur du type indiqué ci-dessus. L'ensemble est alors doté d'un socle porteur et muni d'un circuit imprimé, qui est associé frontalement au contacteur et qui présente des connexions enfichables sur les bornes de contrôle du contacteur afin de permettre de relier ses bornes de commande de bobine à un bus de terrain. Ce dispositif a pour inconvénient d'entraîner des efforts fâcheux sur les connexions du circuit imprimé lorsqu'on l'applique sur le contacteur. De plus, le circuit imprimé est recouvert par un plastron qui ne recouvre que le contacteur, en laissant le disjoncteur dégagé et en obligeant l'opérateur à réaliser les éventuelles liaisons avec le disjoncteur.

L'invention a pour but de simplifier la réalisation et le montage d'un ensemble de départ-moteur, tout en ménageant des connexions fiables avec le contacteur et le disjoncteur.

Selon l'invention, ce but est atteint par un ensemble de départ-moteur présentant les caractéristiques énoncées à la revendication 1. plastron présente avantageusement une fenêtre autorisant l'accès à des éléments de commande manuelle du disjoncteur.

De préférence, un boîtier d'additif du disjoncteur, comportant d'une part les contacts des bornes de contrôle du disjoncteur et d'autre part un élément mécanique destiné à coopérer avec le mécanisme du disjoncteur, est solidarisé avec le boîtier du plastron de contrôle et forme pour le plastron un moyen de guidage et de maintien sur ensemble de départ. Le premier groupe de connexions, qui peut être constitué par des lames souples venant de connecter à des pistes d'un circuit imprimé prévu dans le répartiteur de contrôle, est alors déchargé des efforts fâcheux à l'application du plastron sur le disjoncteur et le contacteur.

On peut prévoir dans le plastron un bloc de connexion supérieur comprenant un circuit imprimé, sur lequel peut être par exemple monté un relais de commande de bobine, et comprenant le premier et le second groupe de connexions.

Le troisième (et, lorsqu'il est prévu, le quatrième) groupe de connexions est solidaire d'un bloc de connexion inférieur monté de préférence réglable en position dans le plastron de contrôle, la nécessaire liaison avec le circuit imprimé du premier bloc de connexion étant assurée par des conducteurs souples logés par exemple latéralement dans le plastron.

La description va être faite ci-après d'un mode de réalisation non limitatif de l'invention, en regard des dessins annexés.

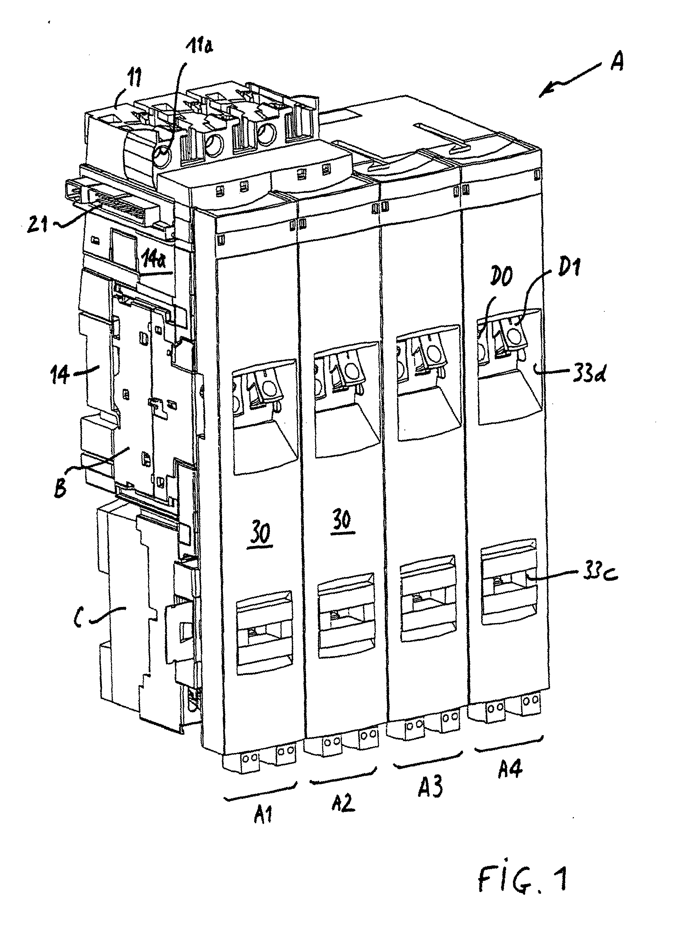

La figure 1 représente en perspective un ensemble de départ-moteur conforme à l'invention.
La figure 2 est une vue en perspective éclatée de l'ensemble de départ-moteur.

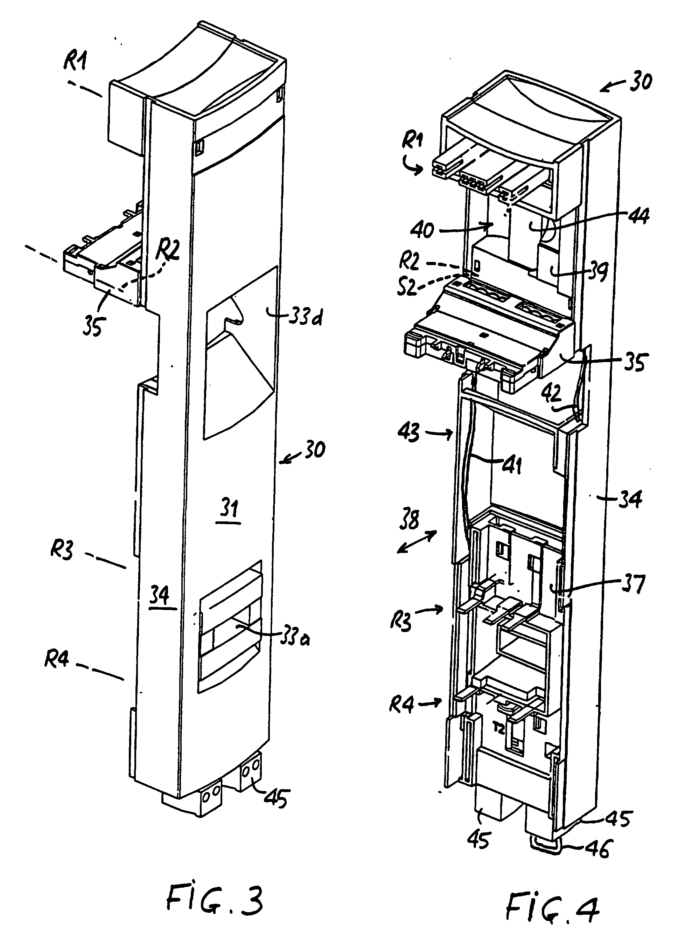

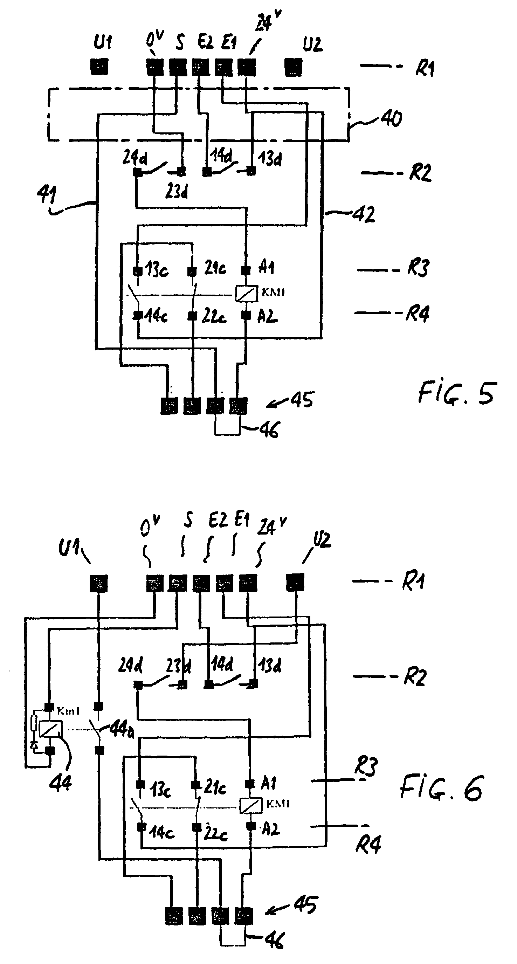

Les figures 3 et 4 montrent à plus grande échelle un plastron de contrôle respectivement en perspective avant et en perspective arrière.
Les figures 5 et 6 sont des schémas d'interconnexion réalisables entre les divers composants de l'ensemble de départ-moteur.

L'ensemble de départ-moteur A illustré sur les figures comprend plusieurs groupes de départs-moteur multipolaires A1-A4 composés chacun d'un disjoncteur B, d'un contacteur C et d'accessoires de connexion qui vont être décrits. La fixation des groupes A1-A4 à un support arrière peut s'effectuer directement ou par l'intermédiaire d'un socle porteur ; elle n'est pas l'objet de l'invention. Dans le cas représenté, on associe au disjoncteur B de chaque groupe un bloc de montage 14 solidarisé avec le disjoncteur à l'arrière de celui-ci. Le bloc 14 présente une âme verticale 14a qui sert à aligner en profondeur le disjoncteur avec le contacteur et une aile horizontale 14b qui sert à fixer un répartiteur de puissance 10.

Le répartiteur de puissance 10 de l'ensemble A est de forme générale parallélépipédique relativement plate et allongée. Il comprend des conducteurs d'alimentation de puissance pour les groupes A1-A4 et il est assemblé aux ailes 14b des blocs 14. Il pourrait aussi être assemblé aux disjoncteurs B sur leur face supérieure. Le répartiteur 10 est lui-même alimenté par un bornier amont de puissance 11 relié à une source d'énergie électrique ; le bornier 11 est connecté et assemblé au répartiteur 10. Le bornier 11 présente des bornes 11a aptes à la fixation élastique des conducteurs d'alimentation reliés à la source d'énergie et des broches 11b dirigées vers l'arrière pour se connecter aux bornes T1, ainsi que des passages frontaux 11c et 11d pour les connecteurs S1 et les broches de puissance des modules 12 qui seront décrits plus loin.

La liaison de puissance entre le répartiteur 10 et les disjoncteurs B est assurée au moyen de modules multipolaires de connexion amont 12 embrochables dans les bornes respectives T1 du répartiteur et T2 des disjoncteurs. De même, la liaison de puissance entre les disjoncteurs B et les contacteurs C est assurée au moyen de modules multipolaires de connexion aval 13 identiques aux modules amont et embrochables dans les bornes respectives T3 des disjoncteurs et des T4 contacteurs. On notera que les modules s'inscrivent dans les parties en creux formées par le disjoncteur et le contacteur de manière que l'ensemble disjoncteur / contacteur /modules offre un profil avant sensiblement plan qui permet de poser un plastron peu encombrant de forme plate. La liaison de puissance entre les bornes aval T5 des contacteurs C et la charge s'effectue à l'aide de borniers aval non indiqués.

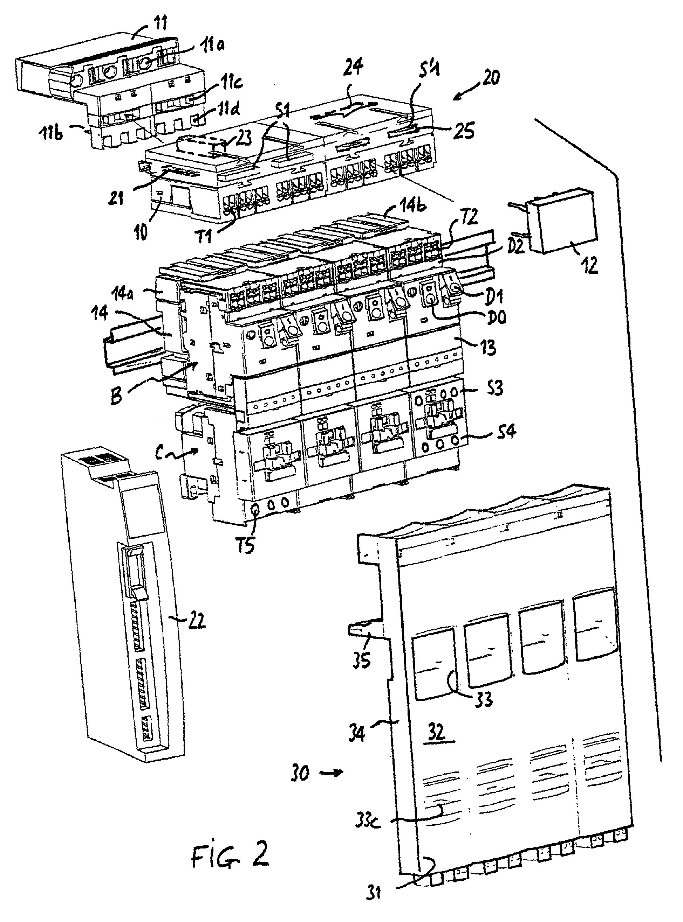

La liaison de contrôle comprend un répartiteur de contrôle de forme générale parallélépipédique relativement plate et allongée qui peut être disposé au-dessus ou au-dessous du répartiteur 10 de puissance. De préférence, il est situé au-dessus et combiné au répartiteur 10 pour former un répartiteur unique 20 de puissance et de contrôle (comme indiqué figure 2).

Le répartiteur 20 est relié soit par un connecteur latéral 21 à un module de communication 22, soit par un connecteur supérieur 23 illustré en tirets figure 2 à un automate programmable ou réseau correspondant, et il comprend un circuit imprimé horizontal 24 doté de connecteurs frontaux S1 (voir partie gauche du répartiteur 20 sur la figure 2) ou de pistes S'1 directement accessibles par une ouverture frontale 25 (voir partie droite du répartiteur 20 sur la figure 2).

Un plastron de contrôle 30 est prévu pour chaque groupe de départ-moteur. Il comporte un corps isolant 31 à face frontale 32 dans laquelle est ménagée une fenêtre 33d d'accès aux boutons de commande manuelle D0,D1 du disjoncteur et une fenêtre 33c de visualisation ou d'accès à la face avant du contacteur. Le plastron 30 présente aussi des faces latérales 34, de façon à former une boîte allongée ouverte vers l'arrière. Il offre diverses rangées de connexions destinées à se connecter dans les bornes du répartiteur 20, du disjoncteur B et du contacteur C. Le disjoncteur présente des bornes de signalisation S2 situées au-dessus des boutons D0,D1, par exemple disposées sur un additif rapporté dans une fenêtre frontale D2 du disjoncteur. Le contacteur présente des bornes de contrôle, c'est-à-dire de commande de bobine ou de signalisation d'état, hautes S3 et basses S4.

Les rangées de connexions du plastron 30 sont : une première rangée de connexions R1 destinée à coopérer avec le connecteur respectif S1, une deuxième rangée de connexions R2 destinée à coopérer avec les bornes S2 du disjoncteur, une troisième et une quatrième rangée de connexions R3 et R4 destinées à coopérer avec les bornes respectives S3 et S4 du contacteur. Les rangées R3 et R4 sont réalisées sous forme de broches cylindriques ou plates afin de coopérer avec des bornes élastiques des appareils B,C. la rangée R2, bien que réalisable au moyen de fiches, est de préférence incluse avec les bornes S2 dans un boîtier 35 d'additif plat semblable à un boîtier d'additif usuel pour des disjoncteurs de ce genre, mais solidarisé de manière permanente ou amovible avec le plastron. Le boîtier 35 comprend des contacts reliés aux bornes S2 et est capable de coopérer mécaniquement au moyen d'un élément 36 avec le mécanisme du disjoncteur, via l'ouverture frontale D2 prévue dans le corps de celui-ci au-dessus des boutons D0,D1, pour être mené par ce mécanisme. L'additif forme ainsi une console de guidage et de maintien du plastron dans l'ensemble de départ-moteur. La rangée R1 se compose de pinces ou lames élastiques, mais peut aussi être formée de fiches rigides. Dans le présent exemple, il s'agit de dix lames élastiques venant se connecter par glissement sur des pistes correspondantes S'1 du circuit imprimé biface 24 prévu dans le répartiteur 20.

Les rangées R3, R4 sont disposées dans un bloc inférieur 37 monté dans le plastron de manière à être déplaçable dans une direction 38 perpendiculaire à sa face frontale 32 afin de s'adapter à des contacteurs de différentes dimensions. Le plastron 30 comporte aussi un bloc supérieur 39 doté d'un circuit imprimé 40 auquel sont soudées les lames élastiques qui forment les connexions R1. Les lames sont soulagées des efforts de montage grâce à la coopération du boîtier 35 avec son logement dans le boîtier du disjoncteur. Des conducteurs souples 41,42, logés dans des espaces ou canaux latéraux 43 du plastron sont prévus pour relier les connexions R3, R4 au circuit imprimé 40, tandis qu'un relais 44 de commande de bobine est monté sur le circuit imprimé. Des connexions 45 autorisant la mise d'un shunt 46 sont disposées à la partie inférieure du plastron.

Le schéma de la figure 5 montre les interconnexions réalisées avec le plastron lorsque l'alimentation est continue et présente entre les bornes 0V et 24V ; la commande de bobine a lieu au travers de la borne S, du shunt 46, de la bobine KM1, des contacts 24d,23d normalement ouverts de l'additif 35 du disjoncteur et de la borne 0V. La signalisation d'état du contacteur est recueillie sur la borne E1, reliée aux contacts auxiliaires normalement ouverts 13c,14c contacteur, et à la borne 24V, tandis que la signalisation d'état du disjoncteur est recueillie sur la borne E2, reliée aux contacts auxiliaires normalement ouverts 14d,13d du disjoncteur, et à la borne 24V. Sur la figure 6 est illustré une commande de bobine en courant alternatif via les bornes S et 0V et la bobine du relais 44, cette commande étant relayée par les contacts 44a du relais disposés dans un circuit relié aux bornes U1,U2 et incluant la bobine KM1 et les contacts 24d,23d de l'additif 35 du disjoncteur.

## Revendications

1. Ensemble de départ-moteur comprenant
- un disjoncteur (B),
- un contacteur (C) disposé sous le disjoncteur,
- le disjoncteur et le contacteur étant munis de bornes de puissance et de bornes de contrôle,
- un plastron et des conducteurs de commande étant associés au contacteur,
***caractérisé par le fait que***
- le plastron est un plastron de contrôle (30) incluant les conducteurs de commande, fixé par l'avant sur l'ensemble de départ (A) et recouvrant le disjoncteur (B) et le contacteur (C),
- le plastron présente un premier groupe de connexions hautes (R1) reliées aux connexions (S1) de répartition d'un répartiteur de contrôle (20) fixé à l'ensemble de départ, et intègre un second groupe de connexions intermédiaires (R2) reliées aux bornes de contrôle (S2) du disjoncteur, et au moins un troisième groupe de connexions basses (R3,R4) connectées aux bornes de contrôle (S3,S4) du contacteur.

2. Ensemble selon la revendication 1, **caractérisé par le fait qu'**au disjoncteur (B) est associé un boîtier d'additif (35) comportant d'une part les contacts des bornes (S2) de contrôle du disjoncteur et d'autre part un élément mécanique (36) destiné à coopérer avec le mécanisme du disjoncteur, le boîtier d'additif étant solidarisé avec le boîtier (31) du plastron de contrôle (30) et formant pour le plastron un moyen de guidage et de maintien dans l'ensemble de départ.

3. Ensemble selon la revendication 1, **caractérisé par le fait que** le plastron de contrôle (30) présente une fenêtre d'accès à des éléments (D0,D1) de commande manuelle du disjoncteur.

4. Ensemble selon la revendication 1, **caractérisé par le fait qu'**un circuit imprimé (40) est solidarisé avec les connexions (R1) du premier groupe et est relié d'une part par des conducteurs verticaux au troisième groupe de connexions (R3), d'autre part par des conducteurs horizontaux aux connexions de répartition (S1).

5. Ensemble selon la revendication 4, **caractérisé par le fait qu'**un bloc de connexion supérieur (39) est logé dans le plastron et comprend le circuit imprimé (40) ainsi que le premier et le second groupe de connexions (R1,R2).

6. Ensemble selon la revendication 1, **caractérisé par le fait que** le premier groupe de connexions (R1) est constitué par des lames souples et que les connexions de répartition sont constituées par des pistes (S'1) d'un circuit imprimé (24) prévu dans le répartiteur de contrôle (20).

7. Ensemble selon la revendication 1, **caractérisé par le fait que** le troisième (et, lorsqu'il est prévu, le quatrième) groupe de connexions (R3,R4) est solidaire d'un bloc de connexion inférieur (37) monté réglable en position dans le plastron de contrôle (30).

8. Ensemble selon la revendication 4, **caractérisé par le fait que** les groupes de connexion inférieurs (R3,R4) sont reliés par des conducteurs souples (41,42) au circuit imprimé (40).

9. Ensemble selon la revendication 1, **caractérisé par le fait que** des modules de connexion de puissance (13,12) sont prévus à l'avant du disjoncteur et respectivement du contacteur pour se connecter à leurs bornes d'accès frontal (T2,T5) et à l'alimentation et/ou à la charge, les modules de connexion étant recouverts par le plastron (30).

## Claims

1. Motor start assembly comprising
- a circuit breaker (B),
- a contactor (C) positioned under the circuit breaker,
- the circuit breaker and the contactor being provided with power terminals and control terminals,
- a cover assembly and control conductors being associated with the contactor,
***characterized in that***
- the cover assembly is a control cover assembly (30) including the control conductors, which is fixed at the front to the start assembly (A) and covers the circuit breaker (B) and the contactor (C),
- the cover assembly has a first group of top connections (R1) linked to the distribution connections (S1) of a control distributor (20) fixed to the start assembly, and incorporates a second group of intermediate connections (R2) linked to the control terminals (S2) of the circuit breaker, and at least one third group of bottom connections (R3, R4) connected to the control terminals (S3, S4) of the contactor.

2. Assembly according to Claim 1, **characterized in that** the circuit breaker (B) has associated with it an add-on module (35) comprising, on the one hand, the contacts of the control terminals (S2) of the circuit breaker and, on the other hand, a mechanical element (36) intended to cooperate with the mechanism of the circuit breaker, the add-on module being joined to the casing (31) of the control cover assembly (30) and forming for the cover assembly a guidance and securing means in the start assembly.

3. Assembly according to Claim 1, **characterized in that** the control cover assembly (30) has a window for accessing manual control elements (D0, D1) of the circuit breaker.

4. Assembly according to Claim 1, **characterized in that** a printed circuit (40) is joined with the connections (R1) of the first group and is linked, on the one hand, by vertical conductors to the third group of connections (R3), on the other hand by horizontal conductors to the distribution connections (S1) .

5. Assembly according to Claim 4, **characterized in that** a top connection block (39) is housed in the cover assembly and comprises the printed circuit (40) and the first and the second groups of connections (R1, R2).

6. Assembly according to Claim 1, **characterized in that** the first group of connections (R1) comprises flexible blades and the distribution connections comprise tracks (S'1) of a printed circuit (24) provided in the control distributor (20).

7. Assembly according to Claim 1, **characterized in that** the third (and, when provided, the fourth) group of connections (R3, R4) is (are) joined to a bottom connection block (37) mounted with position adjustment in the control cover assembly (30).

8. Assembly according to Claim 4, **characterized in that** the bottom groups of connections (R3, R4) are linked by flexible conductors (41, 42) to the printed circuit (40).

9. Assembly according to Claim 1, **characterized in that** power connection modules (13, 12) are provided at the front of the circuit breaker and respectively of the contactor to be connected to their front access terminals (T2, T5) and to the power supply and/or to the load, the connection modules being covered by the cover assembly (30).

## Patentansprüche

1. Motorstarteinheit, umfassend:
- einen Schutzschalter (B),
- ein Schütz (C), das unter dem Schutzschalter angeordnet ist,
- wobei der Schutzschalter und das Schütz mit Leistungsklemmen und Kontrollklemmen versehen sind,
- eine Schutzplatte und Steuerleiter, die mit dem Schütz verbunden sind,
**dadurch gekennzeichnet, dass**
- die Schutzplatte eine Kontrollschutzplatte (30) ist, die die Steuerleiter einschließt, von vorne auf der Starteinheit (A) montiert ist und den Schutzschalter (B) und das Schütz (C) abdeckt,
- die Schutzplatte eine erste Gruppe von oberen Anschlüssen (R1) aufweist, die mit den Verteilungsanschlüssen (S1) eines Kontrollverteilers (20) verbunden sind, der an der Starteinheit befestigt ist, und eine zweite Gruppe von Zwischenanschlüssen (R2) umfasst, die mit den Kontrollklemmen (S2) des Schutzschalters verbunden sind, und mindestens eine dritte Gruppe von unteren Anschlüssen (R3, R4) umfasst, die an die Kontrollklemmen (S3, S4) des Schützes angeschlossen sind.

2. Einheit nach Anspruch 1, **dadurch gekennzeichnet, dass** mit dem Schutzschalter (B) ein Gehäuse eines Zubehörs (35) verbunden ist, einerseits umfassend die Kontakte der Kontrollklemmen (S2) des Schutzschalters und andererseits ein mechanisches Element (36), das dazu bestimmt ist, mit dem Mechanismus des Schutzschalters zusammenzuwirken, wobei das Zubehörgehäuse mit dem Gehäuse (31) der Kontrollschutzplatte (30) verbunden ist und für die Schutzplatte ein Führungs- und Haltemittel in der Starteinheit bildet.

3. Einheit nach Anspruch 1, **dadurch gekennzeichnet, dass** die Kontrollschutzplatte (30) ein Zugriffsfenster auf manuelle Steuerelemente (D0, D1) des Schutzschalters aufweist.

4. Einheit nach Anspruch 1, **dadurch gekennzeichnet, dass** eine gedruckte Schaltung (40) mit den Anschlüssen (R1) der ersten Gruppe verbunden und einerseits durch vertikale Leiter mit der dritten Anschlussgruppe (R3) und andererseits durch horizontale Leiter mit den Verteilungsanschlüssen (S1) verbunden ist.

5. Einheit nach Anspruch 4, **dadurch gekennzeichnet, dass** ein oberer Anschlussblock (39) in der Schutzplatte angeordnet ist und die gedruckte Schaltung (40) sowie die erste und die zweite Anschlussgruppe (R1, R2) umfasst.

6. Einheit nach Anspruch 1, **dadurch gekennzeichnet, dass** die erste Anschlussgruppe (R1) von flexiblen Blättchen gebildet ist, und dass die Verteilungsanschlüsse von Spuren (S'1) einer gedruckten Schaltung (24) gebildet sind, die im Kontrollverteiler (20) vorgesehen ist.

7. Einheit nach Anspruch 1, **dadurch gekennzeichnet, dass** die dritte Anschlussgruppe (und, wenn vorgesehen, die vierte) (R3, R4) mit einem unteren Anschlussblock (37) verbunden ist, der in der Kontrollschutzplatte (30) in seiner Position einstellbar ist.

8. Einheit nach Anspruch 4, **dadurch gekennzeichnet, dass** die unteren Anschlussgruppen (R3, R4) durch flexible Leiter (41, 42) mit der gedruckten Schaltung (40) verbunden sind.

9. Einheit nach Anspruch 1, **dadurch gekennzeichnet, dass** die Leistungsanschlussmodule (13, 12) vorne am Schutzschalter bzw. dem Schütz vorgesehen sind, um sich an ihre Frontzugriffsklemmen (T2, T5) und die Versorgung und/oder die Last anzuschließen, wobei die Anschlussmodule von der Schutzplatte (30) abgedeckt sind.
